# FASCICULE DE BREVET EUROPEEN

(11) **EP 3 712 333 B1**
(45) Date de publication et mention de la délivrance du brevet: **23.09.2026**
(21) Numéro de dépôt: 19305330.3
(22) Date de dépôt: 19.03.2019
(51) Int. Cl.: E02D 17/12, C04B 28/04, C04B 28/06

(54) **PROCÉDÉ DE TRAITEMENT DE MATERIAUX D'EXCAVATION**
VERFAHREN ZUR BEHANDLUNG VON AUSHUBMATERIAL
METHOD FOR THE TREATMENT OF EXCAVATION MATERIALS

(43) Date de publication de la demande: 23.09.2020
(73) Titulaire: SUEZ Groupe, 92040 Paris la Défense Cedex (FR); Holcim Technology Ltd, 6300 Zug (CH)
(72) Inventeur: ROY, Arnaud, 72000 Le Mans (FR); SERCLERAT, Ivan, 92130 Issy-les-Moulineaux (FR)
(74) Mandataire: Atout PI Laplace

(56) Documents cités:
- EP-A1- 0 906 990
- EP-A1- 1 621 522
- EP-A2- 2 226 429
- WO-A2-98/51760
- DE-A1- 102006 021 116
- JP-A- H10 102 528

## Description

### DOMAINE TECHNIQUE DE L'INVENTION

L'invention se situe dans le domaine du traitement et de la gestion des matériaux générés par l'excavation, notamment lors de creusement d'ouvrages. L'invention vise le traitement de matériaux liquides ou pâteux, en particulier sous forme de boues. L'invention concerne plus précisément le traitement de matériaux d'excavation directement dans un contenant de préférence transportable, notamment dans des barges ou dans des bennes.

### ETAT DE LA TECHNIQUE

Les projets d'infrastructures présentent des aménagements souterrains, comme les tunnels, les barrages, les réseaux, les fondations, qui nécessitent des travaux d'excavation et génèrent lors de leurs réalisations des volumes importants de matériaux excavés. L'excavation peut concerner des milieux marins et/ou aquatiques tels que des bassins, ou des milieux non marins.

Dans les bassins, la sédimentation forme des couches sédimentaires par décantation dans le fond de ces bassins. Le curage de bassins, tels des canaux ou installations portuaires, consiste en l'extraction de ces couches sédimentaires formées par décantation. Les matériaux curés, c'est-à-dire issus du curage, sont extraits et généralement exportés vers des terrains de dépôts appropriés.

Dans les milieux hors marins et aquatiques, le creusement correspond à l'excavation ou la fouille dans le sol. Les projets d'infrastructures ont recours à différentes méthodes de creusement en fonction des types de sols.

La nature et les caractéristiques des matériaux excavés lors des méthodes de creusement ou de curage, notamment la composition physicochimique et la granulométrie, varient non seulement en fonction de la nature géologique du terrain creusé ou curé, mais aussi des phénomènes géologiques, chimiques et biologiques qui ont affecté ce sol auparavant, et de la méthode de creusement ou de curage employée, qui ont une incidence directe sur les possibilités d'utilisation ultérieure des matériaux excavés.

Les méthodes de creusement sont par exemple des méthodes de creusement dit « mécanisé », par opposition aux méthodes utilisant des explosifs. Les méthodes de creusement mécanisé sont généralement mises en œuvre à l'aide d'engins, tels que des pelleteuses, des dragues ou des tunneliers. Elles peuvent en particulier être mises en œuvre avec des tunneliers à grippeurs - utilisés de préférence dans les terrains rocheux - ou avec des tunneliers à pression de terre ou à pression de boue - utilisés de préférence dans le cas de terrains meubles (par exemple composés d'argile, de graves, de limon et/ou de sable).

Les méthodes de curage de bassins, par exemple de canaux ou d'installations portuaires, sont par exemple le curage mécanique, c'est-à-dire par des engins à godets, des pelles mécaniques, des dragues à godets, ou le curage hydraulique, c'est-à-dire par des dragues à désagrégateurs ou des pompes.

Lors de l'utilisation de certaines méthodes de curage ou de creusement, comme celles utilisant des tunneliers à pression de terre, ou à pression de boue, les matériaux excavés sont principalement des limons, des sables et/ou des graves, et peuvent contenir de la bentonite, soit parce qu'elle est injectée lors du creusement, soit parce qu'elle est contenue dans le matériau excavé.

Afin de faciliter le travail d'excavation, de l'eau peut être injectée pour ramollir le sol à excaver, si bien que les matériaux excavés se présentent sous la forme de boues liquides ou pâteuses pouvant comprendre des matériaux granulaires. Lesdites boues présentant une siccité variable, pouvant être élevée malgré l'aspect liquide ou pâteux.

Ainsi, les méthodes de creusement peuvent créent un flux important de déchets boueux liquides ou pâteux, qui ne sont pas pelletables, et qui dans certains cas ne sont pas non plus pompables.

Or, dans certaines régions ou pays, notamment en France, les déchets boueux dont la siccité est inférieure à une limite autorisée, par exemple inférieure à 30%, ne sont pas autorisés à être stockés dans une installation de stockage de déchets (voir notamment l'arrêté ministériel AM classe 3 AM 14/12/2014). En outre, dans certaines régions, le stockage des déchets non pelletables est interdit.

Ces méthodes génèrent des volumes importants de matériaux excavés, ce qui ne permet pas toujours d'assurer l'équilibre entre déblais et remblais. De plus, le caractère urbain de certains projets restreint encore l'opportunité d'utiliser les déblais comme remblais, du moins directement sur place ou à proximité. Ainsi, la gestion des matériaux excavés lors du creusement et/ou du curage est devenue un enjeu important pour ces projets d'infrastructure.

De plus, la préservation des ressources et la diminution des impacts sur l'environnement constituent des préoccupations de plus en plus importantes de la part des communautés. Par exemple en France, la Loi du 17 août 2015 relative à la transition énergétique pour la croissance verte « *vise à dépasser le modèle économique linéaire consistant à extraire, fabriquer, consommer et jeter en appelant à une consommation sobre et responsable des ressources naturelles et des matières premières primaires ainsi que, par ordre de priorité, à la prévention de la production de déchets, notamment par le réemploi des produits, et, suivant la hiérarchie des modes de traitement des déchets, à une réutilisation, à un recyclage ou, à défaut, à une valorisation des déchets ».* Il est dès lors de la responsabilité des maîtres d'ouvrage de creusement de travaux souterrains ou de curage de gérer les matériaux excavés conformément à la réglementation en vigueur.

Ce type de déchets nécessite donc un traitement avant d'être transporté et/ou stocké en centre de stockage ou décharge. On peut ainsi mentionner les procédés de déshydratation, mettant en œuvre une unité de déshydratation comprenant par exemple un filtre-presse et/ou une centrifugeuse. Le problème d'une telle unité de déshydratation est qu'elle nécessite de disposer d'une surface de terrain minimale et qui soit de préférence à proximité du chantier d'excavation (par exemple du tunnelier), et en outre cela nécessite des opérations d'évacuation et de transport des matériaux excavés vers ladite unité.

En outre, il existe également des procédés de recyclage de tout ou partie des boues générées par l'excavation, au moins lorsque celles-ci comprennent de la bentonite. Les procédés de recyclage permettent la séparation de la bentonite et du matériau granulaire, et de ce fait permettent la réutilisation des matériaux granulaires, généralement concassés et/ou broyés pour diminuer leur granulométrie et les utiliser dans les travaux de génie civil. Mais les procédés de recyclage ne sont applicables qu'à des types particuliers de boues générées par l'excavation, et nécessitent encore une fois des installations avec une emprise au sol importante, incompatible avec les chantiers ayant des contraintes de place importantes.

On connaît également des procédés consistant à stocker temporairement sur site les boues d'excavation dans un contenant telle une benne, à y ajouter un agent déshydratant, pour rendre les boues d'excavation plus facilement manipulables, notamment pour une manipulation ultérieure à l'aide d'une pelleteuse, ou pour pompage. Ce type de procédé est notamment utilisé dans les chantiers miniers, dans lesquels les boues d'excavations - qui subissent typiquement une étape de broyage lors du procédé d'extraction du minerai - sont généralement utilisées directement après traitement pour remblayer les zones excavées, sans étape de transport intermédiaire dans un véhicule.

En outre, les dispositifs utilisés dans de tels procédés sont généralement des dispositifs de mélange manuels ou de type pelle d'une pelleteuse, dispositifs qui ne permettent pas d'obtenir un mélange homogène entre l'agent déshydratant et les boues d'excavation : de tels procédés ne sont pas adaptés pour une étape intermédiaire de transport dans un véhicule avant remblaiement, puisque la boue n'est pas traitée de manière uniforme. En tout état de cause, de tels procédés ne sont pas adaptés pour traiter des volumes importants de boues.

Alternativement, il est possible d'utiliser un malaxeur fermé, tel qu'un mélangeur statique, mais un tel dispositif nécessite de contrôler la granulométrie des déchets boueux traités, ce qui implique typiquement l'ajout d'une étape préalable de broyage desdits déchets. En outre, de tels dispositifs présentent une emprise au sol trop importante dans un contexte urbain dense. Un exemple de malaxeur fermé est donné dans le document DE1020060211 dans lequel il comprend deux arbres tournant en sens inverse sur lesquels des outils de mélange sont disposés.

Il est connu du document WO98/51760A2 une méthode de traitement de matériaux issus d'excavation comprenant les étapes suivantes :
- retrait de l'eau par pompage et retrait des débris de tailles importantes desdits matériaux issus d'excavations;
- une étape de stockage desdits matériaux sans étape intermédiaire de broyage dans un contenant ouvert;
- une étape d'ajout auxdits matériaux stockés d'un agent déshydratant dans ledit contenant;
- une étape de malaxage desdits matériaux stockés et dudit agent déshydratant réalisée dans le contenant, le malaxage étant effectué avec un malaxeur ouvert dépourvu de contenant, notamment de type roto-mixeur à bras.

Il est également connu du document EP2226429 un godet pour engins de terrassement, comportant un corps de confinement abritant un dispositif de mélange.

Il est par ailleurs connu du document EP1621522 un dispositif de retournement configuré pour retourner et re-mélanger des matières humides comprenant une lame tournant autour d'un arbre et un dispositif de retenue pour ramasser les agglomérats formés dans la matière humide par les lames.

Enfin, il est connu du document JH10102528 une pelleteuse dont le godet est pourvu d'un dispositif de mélange avec des lames et comprenant en outre un réservoir de produits chimiques en poudre injecté dans le godet
Il existe donc un besoin pour un procédé de traitement de matériaux excavés, notamment sous forme de boues, dont l'emprise au sol soit minimale, notamment dans un contexte urbain, tout en permettant le traitement de matériaux excavés dont la siccité est inférieure à une limite autorisée et/ou qui ne sont pas autoportants, et ne nécessitant pas le contrôle de la granulométrie desdits matériaux excavés.

En outre, il serait particulièrement avantageux de disposer d'un procédé de traitement de matériaux excavés qui n'entrainent pas de surcoût important, notamment lors du transport des matériaux excavés traités vers des sites de stockage.

Enfin, il serait particulièrement avantageux de pouvoir traiter des volumes importants de matériaux excavés, notamment des volumes supérieurs ou égaux à 700 m³/jour, notamment des volumes supérieurs ou égaux à 850 m³/jour, par exemple d'environ 1000 m³/jour.

### RESUME DE L'INVENTION

Les inventeurs ont ainsi démontré que l'utilisation d'un dispositif de type malaxeur ouvert, tel qu'un rotomixeur à bras, directement dans un contenant ouvert, permet d'obtenir un mélange homogène de l'agent déshydratant dans les boues d'excavation, et permet de traiter des volumes importants de boues, tels que les volumes générés par un tunnelier. Ainsi, des volumes allant jusqu'à 2000 m³ de boues d'excavation peuvent être traités sur une durée de 24h. En outre, un tel système peut être utilisé dans des contenants ouverts transportables, telles des barges ou des bennes transportables par camions, ce qui permet d'améliorer encore l'efficacité économique global du procédé de traitement et de stockage des déchets boueux issus de chantiers d'excavation.

Les rotomixeurs à bras sont connus de l'art antérieur, mais sont utilisés pour d'autres applications, telle la stabilisation des sols.

On peut notamment citer la demande de brevet EP0906990A1, qui décrit une méthode pour mélanger un matériau de mélange directement avec des matériaux terreux présents dans le sol. Les matériaux de mélange utilisés peuvent être du ciment, des cendres de centrale électrique ou des produits chimiques dont l'ajout solidifie ou fixe les matériaux terreux, la bentonite pouvant en outre être utilisée comme additif isolant dans les matériaux terreux. Une couche de matériau de mélange est déposée sur le sol directement au-dessus d'une couche de matériau de terre à mélanger. Un appareil de mélange à bras articulé qui comprend une tige d'enfoncement reliée à son extrémité à un tambour de coupe est accroché à une machine d'excavation. Le tambour de coupe peut tourner par rapport à la tige d'enfoncement, et il vient en contact avec les couches de matériaux de manière à les mélanger. Le mélange est effectué de telle manière que le tambour de coupe est enfoncé dans les couches de matériaux et est déplacé en sens inverse par rapport à la direction d'avancement de la machine d'excavation. Cette méthode a pour application principale la réalisation des dalles de fondation ou de routes qui sont ainsi construites en mélangeant des matériaux terreux présents avec des matériaux de mélange appropriés, à l'endroit où la dalle ou la route est réalisée, c'est à dire sans avoir à mélanger les matériaux préalablement. Une autre application est la décontamination microbiologique de la terre.

On peut également citer la demande de brevet US2011/0089745A1, qui concerne un dispositif de creusement de sols gérant de manière simultanée le creusement en continu de tranchées et la stabilisation de ces tranchées à l'aide d'un matériau stabilisant, le dispositif comprenant un tambour de coupe pour creuser le sol et un tambour mélangeur pour le stabiliser, les deux tambours ayant un arbre commun. Le système s'applique lorsque des tranchées sont creusées pour réaliser des constructions telles que des barrages, des fondations ou des berges, ainsi que des routes ou des voies ferrées, les tranchées creusées étant ensuite remplies d'une suspension composée de terre excavée, d'eau, de minéraux argileux, de ciment ou de chaux formant le matériau stabilisant : après le durcissement de la suspension, la solidification ou la séparation physique de l'eau, une couche imperméable à l'eau se forme.

Les systèmes et méthodes de EP0906990A1 et US2011/0089745A1 s'appliquent donc à la stabilisation du sol directement au niveau de la tranchée creusée, et non pas à la gestion des matériaux en surplus générés du fait du creusement (les matériaux qui ne sont pas réutilisés dans la suspension par exemple). Ils ne répondent donc pas au besoin susmentionné. Ils ne sont a fortiori pas adaptés à la gestion des boues générées par l'excavation, dont la siccité est inférieure à une limite autorisée et/ou qui ne sont pas pelletables, et qui, comme indiqué, nécessitent des traitements spécifiques. En outre, un tel système et son procédé d'utilisation requièrent une surface au sol importante et ne sont donc pas adaptées à un contexte urbain dense.

Ainsi, l'objet de l'invention est une méthode de traitement de matériaux liquides ou pâteux issus d'excavations selon la revendication indépendante 1.

L'étape a) de stockage permet de constituer un stock de matériaux excavés non-stabilisés.

Grâce à l'étape b) d'ajout d'un agent déshydratant, lesdits matériaux excavés et ledit agent déshydratant constituent un mélange pré-stabilisé. Ceci est notamment le cas lorsque l'agent déshydratant est ou comprend un agent liant.

Grâce à l'étape c) de malaxage desdits matériaux excavés et dudit agent déshydratant, l'on obtient un mélange stable et homogène. Ce mélange stable et homogène est obtenu dans un contenant qui permet un stockage facilité. Le contenant étant de préférence transportable, il a ainsi une emprise au sol minimale et est adaptable. Le mélange stable et homogène est déjà stocké dans un contenant lors de l'étape de malaxage, il peut donc être transporté sans nécessairement une étape de transfert depuis le lieu de préparation du mélange vers son lieu de stockage intermédiaire ou final.

Notamment, la méthode de l'invention concerne le traitement durable de matériaux liquides ou pâteux issus d'excavation. Par traitement durable l'on entend un traitement qui vise à satisfaire à des principes de respect à long terme de l'environnement.

Ladite méthode de traitement des matériaux liquides ou pâteux issus d'excavation est spécialement intéressante pour une économie de l'énergie intrinsèque. L'énergie intrinsèque correspond à la quantité d'énergie nécessaire à l'extraction, la transformation, la mise en œuvre, le recyclage et le transport desdits matériaux issus d'excavation. Ladite méthode de traitement est particulièrement intéressante car elle permet de réduire la quantité d'énergie intrinsèque consommée par les étapes de transformation, recyclage et transport desdits matériaux issus d'excavation. En effet, ladite méthode stocke directement des matériaux excavés dans un contenant ouvert et de préférence transportable et les transforme directement dans ledit contenant ouvert par ajout d'un agent déshydratant et par une étape de malaxage. La méthode évite donc la multiplication des surfaces pour stocker, transformer et transporter les matériaux issus d'excavation et limite les opérations de transfert. De plus, ladite méthode permet de réduire le coût du traitement et son impact environnemental notamment par son gain de temps.

Ladite méthode est particulièrement avantageuse de par l'absence de besoin de séparation des matériaux excavés en fonction de leur granulométrie et donc permet une économie de tri et de transport desdits matériaux.

En particulier, la méthode de l'invention permet de traiter des déchets boueux présentant une granulométrie maximale élevée, notamment supérieure ou égale à 15 cm. Par comparaison, pour une même granulométrie maximale, une méthode utilisant un malaxeur fermé, par exemple un mélangeur statique, nécessiterait de surdimensionner significativement l'installation de traitement des boues (pour limiter les bourrages). La méthode de l'invention est également plus fiable.

Ainsi, ladite méthode de traitement dans un contenant de préférence transportable est également utilisable sur un chantier avec de fortes contraintes de surface au sol utilisée, notamment dans un contexte urbain, par son économie d'emprise au sol. Ladite méthode est spécialement adaptée pour les chantiers restreints en termes d'emprise foncière. En particulier, la variation de production des matériaux excavés (en termes de siccité, volume ou granulométrie) n'influence pas le procédé. En effet, l'étape de malaxage desdits matériaux et dudit agent déshydratant est réalisée directement dans le contenant.

Enfin, la combinaison du stockage des matériaux d'excavation dans un contenant de préférence transportable, de l'ajout d'un agent déshydratant dans ledit contenant et du malaxage dans ledit contenant à l'aide d'un malaxeur ouvert et typiquement mobile représente une économie de manœuvres de transport et de transformation, et réduit l'énergie intrinsèque utilisée comparativement aux méthodes de l'art antérieur.

### EXPOSE DETAILLE DE L'INVENTION

### I. Méthode de traitement de matériaux liquides ou pâteux issus d'excavations

### Matériaux liquides ou pâteux issus d'excavations

Par « matériaux issus d'excavations » ou « matériaux d'excavations », on entend au sens de la présente invention des matériaux générés par des travaux d'excavation tels que le creusement ou le curage.

Par « matériaux liquides ou pâteux », on entend au sens de la présente invention des matériaux constitués d'un mélange de liquides et de matières solides, notamment des « boues » ou « déchets boueux ». Ces « matériaux liquides ou pâteux » ne sont pas autoportants, et donc ne sont pas considérés comme pelletables.

En particulier, les « matériaux liquides ou pâteux issus d'excavations » peuvent être des boues d'excavations. Par « boues d'excavation », on entend au sens de la présente description des boues générées par les travaux d'excavation tels que le creusement ou le curage. Elles sont également non autoportantes, et ne sont pas pelletables en l'état.

Par « autoportant », on entend au sens de la présente description, des boues dont l'indice de Portance Immédiate (IPI) est supérieur ou égal à 3 (mesuré selon la norme NF P 94-078 de mai 1997), et de préférence dont l'affaissement (ou « slump ») est inférieure ou égal à 5 cm selon le test du cône d'Abrams (mesuré notamment selon la norme NF EN 12350-2 de avril 2012).

Par « pelletable », on entend au moins un déchet autoportant. Néanmoins, un déchet pelletable sera suffisamment mou ou divisé pour pouvoir être déplacé à l'aide d'une pelle.

Les matériaux ainsi que les boues liquides ou pâteux sont notamment caractérisés par leur siccité. La « siccité » d'un matériau est un rapport, exprimé en pourcentage, entre la masse restante après dessiccation et la masse au moment du prélèvement, dans les conditions de l'essai NF EN15934 de septembre 2012, dans lequel la dessiccation est effectuée par chauffage à 110°c jusqu'à poids constant. La siccité de matériaux liquides ou pâteux correspond au pourcentage massique de matière sèche. Ainsi, une siccité d'un matériau liquide ou pâteux de 40 % correspond à un matériau liquide ou pâteux présentant une teneur en eau de 60 %.

Les matériaux et/ou boues d'excavations liquides ou pâteux de l'invention peuvent présenter des siccités variables, pouvant être élevées malgré l'aspect liquide ou pâteux.

Les matériaux liquides comprennent en général de 6 à 40 % de matière sèche, tandis que les matériaux pâteux comprennent généralement environ 40 à 60 % de matière sèche. En particulier, les boues peuvent présenter une siccité comprise entre 20% et 70%, typiquement entre 25% et 60%, notamment entre 30 et 40% ou entre 40% et 50%.

Les matériaux et boues d'excavations liquides ou pâteux possèdent un indice de Portance Immédiate (IPI) inférieur à 3, mesuré selon la norme NF P 94-078 de mai 1997. En outre, les matériaux pâteux sont de préférence caractérisés par un indice d'affaissement (ou *« slump* ») supérieur ou égal à 5 cm selon le test du cône d'Abrams, mesuré notamment selon la norme NF EN 12350-2 de avril 2012, qui se rapporte au béton mais est transposable et transposée pour les boues à traiter de l'invention. Les matériaux liquides possèdent en général un indice d'affaissement supérieur ou égal à 25.

Les matériaux et boues d'excavations liquides ou pâteux peuvent contenir des grains ou blocs. Ces blocs ou grains peuvent présenter en outre une granulométrie maximale élevée, typiquement comprise entre 1 cm et 40 cm, notamment comprise entre 5 cm et 25 cm, par exemple d'environ 15 cm. Au sens de la présente invention, la granulométrie maximale s'entend notamment de la valeur d90, indice indiquant que 90% en masse des grains présentent un diamètre équivalent inférieur à la valeur de d90, mesurée selon la méthode de la norme NF EN 933-1 de mai 2012. La méthode de l'invention permet ainsi de traiter des matériaux et boues d'excavations liquides ou pâteux traités dans l'invention n'ayant pas subi d'étape préalable de broyage, qui aurait pu avoir pour conséquence de diminuer la valeur de d90. Autrement dit, la méthode de l'invention est de préférence appliquée sur les matériaux directement issus d'excavations, sans étape intermédiaire de broyage.

Selon un mode de réalisation particulier, les matériaux et/ou boues d'excavations liquides ou pâteux sont issus d'excavations par creusement mécanisé, notamment par tunnelier. En particulier, il s'agit de matériaux et/ou de boues d'excavations liquides ou pâteux issus d'excavations par des tunneliers à grippeurs ou des tunneliers à pression de boue ou à pression de terre.

Lors de l'utilisation de certaines méthodes de curage ou de creusement, comme celles utilisant des tunneliers à pression de terre, ou à pression de boue, les matériaux excavés sont principalement des limons, des sables et/ou des graves, et peuvent contenir de la bentonite, soit parce qu'elle est injectée lors du creusement, soit parce qu'elle est contenue dans le matériau excavé. Ainsi, les matériaux et boues d'excavations liquides ou pâteux peuvent être notamment des boues bentonitiques et/ou des boues crayeuses.

Par « bentonite », on entend au sens de la présente description une argile colloïdale essentiellement constituée de montmorillonite (Na,Ca)_{0.33}(Al,Mg)₂Si₄O₁₀(OH)₂(H2O)ₙ qui est une argile avec une capacité de rétention d'eau élevée, et qui peut également comprendre d'autres minéraux comme le quartz, le mica, le feldspath, la pyrite ou la calcite. De ce fait, la bentonite est généralement un mélange d'argile très fine et d'eau, de petites quantités de bentonite en solution aqueuse formant un mélange visqueux dont la viscosité baisse lorsque l'effort mécanique qui lui est appliqué augmente. Les « boues bentonitiques » sont des boues recelant une fraction de bentonite.

Selon un autre mode de réalisation, lesdits matériaux liquides ou pâteux sont issus de curage de bassins, notamment canaux et installations portuaires.

Par « bassins », l'on entend dans cette description, les milieux naturels ou semi-naturels, les réseaux de distribution d'eau et/ou d'eaux usées, les fosses de drainage, les wateringues, les zones humides, les voies navigables dont les canaux et les installations portuaires.

### Etape a)

L'étape a) consiste en un stockage de courte durée, de quelques minutes à 24h ou 48h, avant que l'étape b) ne soit mise en œuvre. Généralement, la durée de stockage est de quelques minutes à quelques heures seulement, c'est-à-dire que l'étape b) est mise en œuvre entre 5 minutes et 12 heures ou de préférence 6 heures après la mise en place des matériaux d'excavation dans le contenant.

Le contenant de l'étape a) est ouvert, c'est-à-dire qu'il présente une ouverture sur une partie ou sur la totalité de sa surface supérieure, permettant l'introduction des boues, de l'agent déshydratant de l'étape b) et éventuellement d'autres additifs, et du dispositif de malaxage utilisé à l'étape c).

Le contenant est typiquement étanche (hors son ouverture), suffisamment pour éviter les fuites liquides lors du stockage des matériaux ou boues liquides ou pâteux.

Le contenant est de préférence transportable. Par « contenant transportable », l'on entend tout contenant pouvant contenir lesdits matériaux liquides ou pâteux issus d'excavations et qui n'est pas fixé au sol. Il est de préférence adapté pour être transportable. Particulièrement, un tel contenant transportable peut consister en une benne qui peut être montée sur un véhicule ou une remorque d'un véhicule. Il peut également s'agir d'une barge ou la cale d'un bateau automoteur, avantageusement à fond plat.

Par « barge », l'on entend tout chaland ou embarcation destiné au transport sur les bassins, rivières, canaux et installations portuaires. Une barge est généralement non motorisée. Par « bateau automoteur », on entend une barge motorisée.

Alternativement, il peut s'agir de fosses ou de casiers, qui sont en général non transportables, c'est-à-dire que dans ce cas, les boues obtenues par la méthode de l'invention nécessitent d'être transvasées dans un contenant transportables pour être transportées en centre de stockage.

Avantageusement, le contenant est dépourvu de moyen d'agitation, tel qu'un agitateur. Ainsi, de préférence, le contenant n'est pas un mélangeur ni un malaxeur fermé.

### Etape b)

L'étape d'ajout peut par exemple consister en une étape de versement de l'agent déshydratant sur lesdits matériaux. Notamment, l'étape d'ajout comprend au moins une étape d'injection de l'agent déshydratant dans ledit contenant. Par « injection » l'on entend l'introduction de l'agent déshydratant par gravité ou sous pression dans les desdits matériaux stockés dans ledit contenant. Notamment, il peut être procédé à une injection dans les interstices ou dans la masse desdits matériaux stockés. De préférence, l'étape d'injection de l'agent déshydratant est effectuée au moyen d'un conduit disposé le long d'un bras ou intégré au bras d'un engin (le bras étant typiquement articulé) et qui permet le déversement de l'agent déshydratant dans la masse desdits matériaux stockés. Une buse peut être disposée à une extrémité du conduit en contact avec lesdits matériaux stockés.

Avantageusement, le rapport massique entre la quantité d'agent déshydratant ajoutée et le matériau stocké dans le contenant est compris entre 0,1 à 10 %, de préférence 0,1 à 5 %, par exemple de 0,5 à 2,5 %, notamment, de 0,7 à 2%, en particulier 1,8 %.

L'homme du métier saura adapter le rapport massique entre la quantité d'agent déshydratant à ajouter et le matériau stocké dans le contenant en fonction du résultat recherché et/ou de l'agent déshydratant.

Par « agent déshydratant », on entend au sens de la présente invention tout additif chimique apte à capter au moins une partie de l'eau contenue dans les matériaux issus d'excavation. Des exemples d'agent déshydratants sont les argiles telles que la vermiculite ou la bentonite. On peut également citer des polymères super-absorbants. De préférence, l'agent déshydratant comprend également ou est constitué d'un agent liant.

Par « agent liant », l'on entend au sens de la présente invention un agent qui a pour propriété de se solidifier pour lier les matériaux liquides ou pâteux issus d'excavations. L'agent liant lie entre eux les matériaux de manière à leur conférer de la cohésion.

De manière avantageuse, l'agent déshydratant comprend ou est constitué d'un agent liant, par exemple du ciment et/ou de la chaux. De préférence, l'agent liant comprend ou est constitué de ciment, notamment de ciment à prise rapide, typiquement un ciment Portland, de préférence un ciment d'aluminates, un ciment sulfo-alumineux, ou leur mélange.

Dans la présente invention, on entend par « chaux » un solide comprenant ou constitué de CaO. Plus particulièrement, la chaux est un oxyde de calcium avec plus ou moins d'oxyde de magnésium et des impuretés à base de carbonates et d'hydroxydes de calcium ou magnésium, d'argiles, de divers silico-aluminates. On distingue :
- la *chaux vive* est le produit direct de la thermolyse ou calcination du calcaire, principalement de l'oxyde de calcium (CaO) ;
- la *chaux éteinte* est obtenue après la réaction complète de la chaux vive avec de l'eau et un séchage rigoureux. Le solide ainsi obtenu est constitué d'hydroxyde de calcium (Ca(OH)₂). D'un point de vue minéralogique, il s'agit de l'espèce minérale naturelle nommée « portlandite » ;
- la *chaux aérienne* ou *chaux grasse,* un liant de chaux, composant de base de mortier en très faible partie argileux, réagissant avec le dioxyde de carbone (CO₂) de l'air ;
- la *chaux hydraulique,* liant de chaux également, proche d'un *ciment de chaux* qui durcit à l'eau, contient en outre des silicates et des aluminates, car elle est fabriquée à partir de calcaires argileux. Elle est appelée « hydraulique » pour sa première prise : elle durcit en présence d'eau vive avant d'être plus ou moins lentement renforcée à l'air par carbonatation ;
- la *chaux dolomitique* ou *chaux magnésienne,* à base de dolomie ou de calcaire magnésien.

Typiquement, on utilisera de la chaux vive ou de la chaux éteinte.

Selon un mode de réalisation avantageux, l'agent liant est constitué de ciment, notamment de ciment à prise rapide, par exemple un ciment Portlant, ou un ciment d'aluminates, un ciment sulfoalumineux, ou leur mélange.

Un ciment Portland est un liant hydraulique qui contient du clinker Portland. Ce clinker comprend une proportion au moins égale à 50% en masse d'oxyde de calcium (CaO) et de dioxyde de silicium (SiO₂) et tel que défini par la norme NF EN 197-1 d'avril 2012. Un ciment Portland peut donc comprendre d'autres composés en sus du clinker Portland, tels que du laitier, de la fumée de silice, des pouzzolanes (naturelles et naturelle calcinées), des cendres volantes (siliceuse et calcique), du schiste et/ou du calcaire.

Typiquement, un ciment Portland a une teneur en Al₂O₃ inférieure à 5% du poids du ciment, une teneur en CaO supérieure à 55% du poids du ciment, et un rapport massique CaO/Al₂O₃ compris entre 10 et 20.

Un ciment Portland est aussi caractérisé par des phases minéralogiques. Les principales, selon la nomenclature cimentière, sont C3S, C2S, C3A et C4AF. La nomenclature chimique cimentière utilise des abréviations dont les correspondances avec la notation chimique conventionnelle est donnée dans le tableau ci-dessous.

**[Table 1]**

| Notation chimique cimentière | Notation chimique conventionnelle |
|---|---|
| C | CaO |
| S | SiO₂ |
| A | Al2O₃ |
| F | Fe₂O₃ |
| T | TiO₂ |
| M | MgO |
| K | K₂O |
| N | Na₂O |
| H | H₂O |
| C | CO₂ |
| $ | SO₃ |
| P | P₂O₅ |

Les phases aluminates principales qu'un ciment Portland contient sont C3A et C4AF. Un ciment Portland contient typiquement entre 10 et 20 % massique de phases aluminates, exprimé en poids total de liant.

Un ciment Portland peut être sélectionné parmi les ciments décrits dans la norme NF EN 197-1 d'avril 2012, en particulier les ciments CEM I, CEM II, CEM III, CEM IV, ou CEM V, disponibles commercialement.

Un ciment d'aluminates de calcium comprend comme principale phase minéralogique l'aluminate monocalcique, CA, et est tel que défini par la norme NF EN 14647 de 2006. Les autres phases minéralogiques sont typiquement C2A(1-x)Fx (avec x appartient à ]0,1]), C12A7, C2S, C2AS. Selon la norme, la teneur en Al₂O₃ varie de 35% à 58% en poids du ciment.

Un ciment sulfo-alumineux est un liant hydraulique qui contient un clinker sulfo-alumineux. Ce clinker comprend au moins une phase Ye'elemite, C4A3$. Le plus souvent il comprend également de la bélite, C2S.

### Etape c)

L'étape c) de malaxage se distingue d'une simple étape de mélange en ce que le mélange obtenu est homogène.

Par « homogène », on entend dans la présente invention que le mélange obtenu après l'étape c) de malaxage a une composition identique ainsi que des propriétés physiques constantes pour la totalité de ce mélange.

Par « malaxeur ouvert », on entend au sens de la présente invention un moyen de malaxage dépourvu de contenant. Il se définit notamment par contraste avec un mélangeur fermé, qui est solidaire d'un contenant fermé. Un mélangeur statique par exemple est un malaxeur fermé. Un malaxeur ouvert peut par exemple être un bras comprenant à une extrémité des rotors et étant rattaché par son extrémité opposée à un engin.

Le malaxeur ouvert de l'étape c) est typiquement un rotomixeur à bras.

Par « rotomixeur à bras », l'on entend un bras fixable sur un engin comprenant à l'extrémité opposée de sa fixation au moins un rotor ou tête de mélange adapté pour mélanger des matériaux par rotation. Il peut notamment s'agir du rotomixeur à bras tel que décrit dans les demandes de brevet EP0906990A1 et US2011/0089745A1. Ainsi, le malaxeur ouvert comprend avantageusement un tambour de coupe pour creuser le sol et un tambour mélangeur pour le stabiliser, les deux tambours ayant un arbre commun. Selon un mode de réalisation, le malaxeur ouvert est un dispositif de malaxage mobile comprenant à une extrémité une tête de mélange, de préférence un rotomixeur à bras.

De préférence, le rotomixeur à bras est fixé sur un engin, tel qu'une pelleteuse.

L'utilisation d'un malaxeur ouvert permet de malaxer des matériaux et/ou boues issus d'excavations présentant une granulométrie maximale élevée, puisque lorsqu'un grain de taille importante rencontre le malaxeur, celui est rejeté par la tête de malaxage et ne bloque pas le malaxeur. Cela n'est pas le cas dans un malaxeur fermé, qui peut être bloqué si des grains de diamètre équivalent trop important sont traités.

Selon un mode de réalisation particulier, le malaxeur ouvert est mobile, c'est-à-dire qu'il n'est pas fixé au sol et peut se déplacer. En particulier, le rotomixeur à bras peut être adapté sur un engin, tel qu'une pelleteuse. On pourra en particulier utiliser les systèmes de stabilisation commercialisés par la société ALLU.

Avantageusement, le malaxeur ouvert comprend des guides disposés autour de la tête de mélange. Lesdits guides autour de la tête de mélange protègent le contenant et le malaxeur ouvert lors de l'au moins une étape de malaxage.

En particulier, les guides ont pour but d'éviter que les parois du contenant ne soient endommagées par le malaxeur ouvert lorsque celui-ci est en fonctionnement. Ainsi, les guides visent à maintenir une distance de sécurité dans les trois dimensions entre la tête de mélange et les parois du contenant. Les guides peuvent notamment prendre la forme d'un habillage de sécurité ou d'un carter de sécurité disposé dans les trois dimensions autour de la tête de mélange. Il peut notamment s'agir d'une grille fixée à la tête de mélange, disposée à une distance d de la tête de mélange, la distance d étant typiquement comprise entre 5 cm et 30 cm, notamment entre 10 cm et 20 cm. Les fils de la grille sont de préférence relativement éloignés les uns des autres pour permettre un mélange homogène. Alternativement, l'habillage de protection peut prendre la forme d'un dispositif comprenant 3 cercles perpendiculaires deux à deux. Un tel dispositif peut être fixé à la tête de mélange par soudage. Le diamètre des cercles est tel qu'il permet de générer une sphère de rayon R de sécurité autour de la tête de mélange, le rayon R mesurant typiquement entre 5 cm et 30 cm, notamment entre 10 cm et 20 cm.

L'étape de malaxage est mise en œuvre sur des durées courtes. Par exemple, le temps de malaxage peut être compris entre 30 secondes et 30 minutes, notamment entre 1 minutes et 20 minutes, typiquement entre 5 minutes et 15 minutes, par exemple 10 minutes. De telles durées de malaxage sont suffisantes pour obtenir un mélange homogène de l'agent liant avec les matériaux et/ou boues d'excavations, et permettent d'optimiser l'efficacité économique du procédé en mobilisant le contenant et le malaxeur sur des durées courtes.

### Boues traitées

La méthode de l'invention permet de traiter volumes de matériaux ou boues d'excavation liquides ou pâteux supérieurs ou égaux à 700 m³/jour, notamment des volumes supérieurs ou égaux à 850 m³/jour, par exemple d'environ 1000 m³/jour. Les volumes traités peuvent notamment être compris entre 700 m³/jour et 1500 m³/jour, par exemple entre 800 et 1200 m³/jour, notamment entre 900 et 1100 m³/jour.

Les boues obtenues à l'issue de l'étape c) sont pelletables et transportables. Elles peuvent ainsi être ultérieurement stockées en centre de stockage pour déchets dangereux ou non dangereux.

Les boues traitées obtenues à l'issue de l'étape c) présentent alors un indice IPI supérieur ou égal à 3, mesuré selon la norme NF P 94-078.

De préférence, les boues obtenues à l'issue de l'étape c) possèdent un indice d'affaissement inférieur à 5 cm, et typiquement inférieur ou égal à 4 cm. Avantageusement, les boues obtenues à l'issue de l'étape c) présentent une siccité supérieure à leur siccité initiale. Avantageusement, les boues obtenues à l'issue de l'étape c) présentent une siccité supérieure ou égale à 70%, de préférence encore supérieure ou égale à 80%.

### Modes de réalisation particuliers

La méthode de l'invention ne comprend pas d'étape de broyage. Ainsi, la méthode de l'invention permet de traiter avec une efficacité économique accrue des boues directement issues d'excavations, et notamment des boues de tunnelier n'ayant pas subi de traitement de broyage préalable.

Selon un mode de réalisation particulier, la méthode de l'invention consiste en les étapes a), b) et c), étant entendu que les étapes b) et c) peuvent être successives (dans cet ordre) ou concomitantes.

Préférentiellement, l'au moins une étape de malaxage desdits matériaux et dudit agent déshydratant (étape c) est réalisée simultanément à l'au moins une étape d'ajout dans le contenant (étape b).

Selon une variante, particulièrement avantageuse lorsque le malaxeur ne permet pas de malaxer tout le contenu du contenant par malaxage en un seul point, l'étape c) est répétée pour être mise en œuvre en différents points du contenant. Ainsi, de préférence,
- le malaxeur ouvert est mobile, et se déplace lors de la mise en œuvre de l'étape c), ou
- le contenant ouvert est mobile, et se déplace lors de la mise en œuvre de l'étape c).

En particulier, dans le cas où le contenant ouvert est une barge, le malaxeur ouvert ne permet généralement pas de malaxer l'ensemble du contenu de la barge en étant utilisé en un seul point de la barge. Il est donc préférable que l'étape c) soit mise œuvre une première fois, le malaxeur étant disposé dans la barge à proximité d'une première extrémité de cette dernière, puis que la barge se déplace de manière continue ou séquentielle selon un axe permettant au malaxeur d'être déplacé relativement à la barge vers une seconde extrémité de la barge opposée à la première extrémité de la barge. Typiquement, l'axe de déplacement de la barge est une droite parallèle aux parois longitudinales de celle-ci.

Lorsque la barge se déplace de manière continue lors de l'étape c), le malaxeur ouvert reste plongé dans le contenant durant toute la durée de l'étape c).

Alternativement, le malaxeur ouvert peut être disposé dans la barge et à proximité d'une première extrémité de cette dernière afin de mettre en œuvre une première fois l'étape c). Le malaxeur ouvert est ensuite déplacé relativement à la barge vers une seconde extrémité de la barge opposée à la première extrémité de la barge. Typiquement, l'axe de déplacement du malaxeur est une droite parallèle aux parois longitudinales de la barge.

De préférence, le malaxeur se déplace dans le plan du contenant. De manière particulière, le déplacement peut également être vertical.

De préférence, la barge se déplace de manière séquentielle. Dans ce mode de réalisation, le rotomixeur à bras est de préférence sorti du contenant lors des déplacements de la barge ou du malaxeur, pour des raisons de sécurité.

### Etapes ultérieures optionnelles

Avantageusement, les boues obtenues à l'issue de l'étape c) sont transportées, notamment jusqu'à un centre de stockage adapté, puis les boues sont déchargées pour être stockées définitivement, par exemple pour être enfouies.

Le centre de stockage peut être une décharge, notamment une décharge pour déchets dangereux ou une décharge pour déchets non dangereux. Il peut également s'agir d'une carrière, ayant notamment besoin d'être remblayée. Notamment, il peut s'agir d'une carrière d'extraction de matériau de construction comme le calcaire, le gypse, la craie, le grès, le tuf etc.

Dans le cas d'un contenant transportable, les boues issues de l'étape c) sont de préférence directement transportées dans le contenant.

Dans le cas d'un contenant non transportable, les boues obtenues à l'issue de l'étape c) sont transférées dans un contenant transportable pour être transportées en centre de stockage. Le transfert des boues d'un contenant non transportable à un contenant transportable est effectué par exemple par pelletage, notamment à l'aide d'une pelleteuse.

### II. Installation

L'installation suivante ne fait pas partie de l'invention. L' installation de traitement de matériaux liquides ou pâteux issus d'excavation comprenant :
- un contenant apte à contenir des matériaux liquides ou pâteux ;
- un moyen d'ajout apte à ajouter un agent déshydratant dans ledit contenant ;
- un moyen de malaxage ouvert apte à mélanger l'agent déshydratant avec les matériaux liquides ou pâteux dans le contenant.

Le moyen de malaxage ouvert est un malaxeur ouvert tel que décrit plus haut en relation avec l'étape c) de la méthode de traitement des boues.

Préférentiellement, l'agent déshydratant est ou comprend un agent liant.

Selon un mode de réalisation préféré, le moyen de malaxage ouvert comprend le moyen d'ajout.

Selon un mode de réalisation, le malaxeur ouvert est un dispositif de mélange comprenant à une extrémité une tête de mélange, de préférence un rotomixeur à bras, typiquement fixé sur un engin tel qu'une pelleteuse. Selon ce mode de réalisation, le malaxeur ouvert est mobile.

Avantageusement, le malaxeur ouvert comprend des guides disposés autour de la tête de mélange. Les guides sont en particulier tels que décrits plus haut en lien avec l'étape b) de la méthode de l'invention.

Le contenant est tel que décrit plus haut en relation avec l'étape a) de la méthode de traitement des boues. De manière avantageuse, le contenant dudit dispositif est ouvert, typiquement sur sa surface supérieure. Avantageusement, le contenant est une barge, un bateau automoteur à fond plat ou une benne, une fosse ou un casier.

Préférentiellement, le contenant dudit dispositif est transportable. Il s'agit alors typiquement d'une barge, d'un bateau automoteur à fond plat ou d'une benne, notamment d'une benne de camion.

### III. L'utilisation suivante ne fait partie de l'invention:

### Utilisation d'un malaxeur ouvert pour traiter des matériaux liquides ou pâteux issus d'excavation

L'utilisation d'un dispositif de malaxage ouvert comprenant à une extrémité une tête de mélange pour mélanger des matériaux liquides ou pâteux issus d'excavation avec un agent déshydratant dans un contenant.

Préférentiellement, l'agent déshydratant est ou comprend un agent liant.

Le moyen de malaxage ouvert est un malaxeur ouvert tel que décrit plus haut en relation avec l'étape de malaxage (étape c) de la méthode de traitement des boues.

Selon un mode de réalisation préféré, le moyen de malaxage ouvert comprend le moyen d'ajout.

Selon un mode de réalisation, le malaxeur ouvert est un dispositif de mélange comprenant à une extrémité une tête de mélange, de préférence un rotomixeur à bras, typiquement fixé sur un engin tel qu'une pelleteuse. Selon ce mode de réalisation, le malaxeur ouvert est mobile.

Avantageusement, le malaxeur ouvert comprend des guides disposés autour de la tête de mélange. Les guides sont en particulier tels que décrits plus haut en lien avec l'étape d'ajout (étape b) de la méthode de l'invention.

Le contenant est tel que décrit plus haut en relation avec l'étape de stockage (étape a) de la méthode de traitement des boues. De manière avantageuse, le contenant dudit dispositif est ouvert sur sa face supérieure. Avantageusement, le contenant est une barge, un bateau automoteur à fond plat ou une benne, une fosse ou un casier.

Préférentiellement, le contenant dudit dispositif est mobile. Il s'agit alors typiquement d'une barge, d'un bateau automoteur à fond plat ou d'une benne, notamment d'une benne de camion.

### FIGURES

D'autres caractéristiques et avantages de l'invention apparaîtront à l'aide de la description qui suit donnée à titre illustratif et non limitatif et faite en regard des figures annexées parmi lesquelles :
- la figure. 1 illustre un mode de réalisation de l'invention, le contenant étant une barge, et le malaxeur ouvert étant un rotomixeur à bras fixé sur un engin de chantier ;
- la figure 2 illustre un schéma des préparatifs pour effectuer un test du cône d'Abrams ou test de « slump » ;
- la figure 3 illustre un schéma d'un résultat du test du cône d'Abrams ou test de « slump » ;
- la figure 4 illustre une photographie d'un résultat du test du cône d'Abrams ou test de « slump » de boues calcaire comprenant 30 % d'eau ;
- la figure 5 illustre une photographie d'un résultat du test du cône d'Abrams ou test de « slump » de boues calcaire avec 30 % d'eau après un traitement au ciment ;
- la figure 6 illustre un graphique indiquant l'évolution de l'indice de portance immédiate (IPI) en fonction du taux de ciment ajouté dans des boues issues de matériaux excavés ;
- la figure 7 illustre un mode de réalisation de l'invention, dans lequel le contenant est une barge, et le malaxeur ouvert est un rotomixeur à bras fixé sur un engin de chantier.

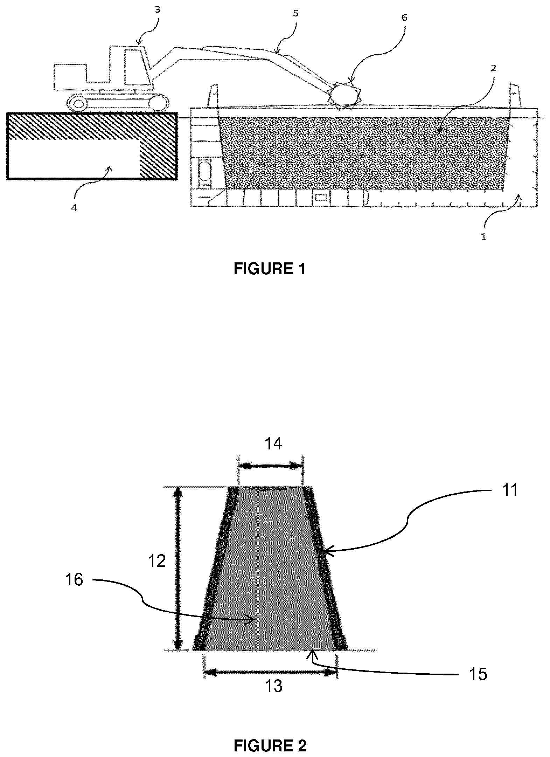

La figure 1 illustre une installation en vue de coupe de traitement de matériaux comprenant une barge 1 dont la face supérieure est ouverte et contenant des matériaux issus d'excavation 2. Un engin de chantier 3 disposé sur une plateforme mobile 4 est équipé d'un bras 5 dont l'extrémité correspond à un rotomixeur 6. Le bras 5 de l'engin de chantier 3 est adapté pour se déplacer et plonger le rotomixeur 6 dans les matériaux issus d'excavation 2, stockés dans la barge 1. Le rotomixeur 6 est adapté pour mélanger un agent déshydratant avec les matériaux issus d'excavation 2 dans la barge 1. Par « engin de chantier » l'on entend du matériel mobile et autonome tel que des bouteurs et pelleteuses.

La norme NF EN 12350-2 d'avril 2012 décrit le test du cône d'Abrams. La figure 2 illustre un tel test du cône d'Abrams comprenant pour sa préparation un cône d'Abrams 11 généralement en acier galvanisé, d'une hauteur 12 de 300 mm dont le diamètre intérieur à sa base 13 est de 200 mm et le diamètre intérieur à son sommet 14 est de 100 mm. Le cône est posé sur une surface 15 qui est dure et non-absorbante, généralement en acier. Le cône d'Abrams 11 posé sur la surface 15 est rempli du matériau 16 dont l'on veut déterminer l'affaissement ou l'étalement.

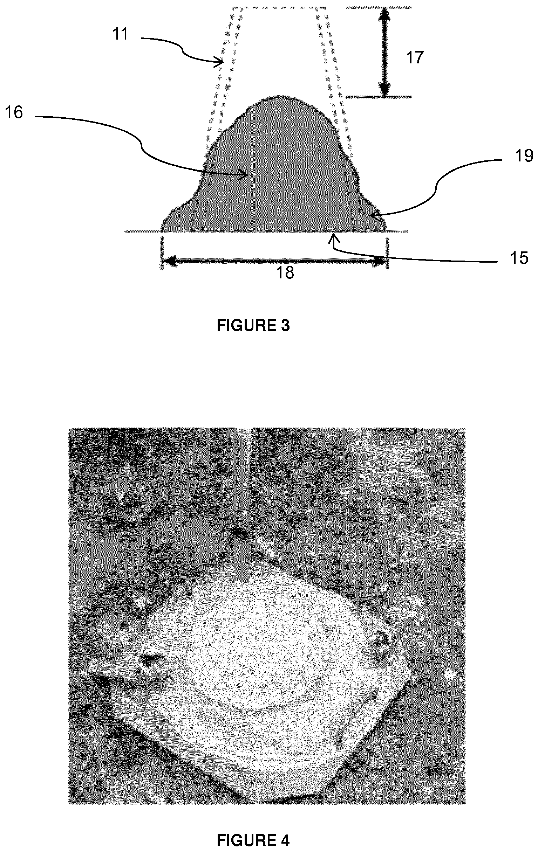

La figure 3 illustre un résultat du test du cône d'Abrams qui est obtenu par la levée verticale du cône d'Abrams 11. L'affaissement ou « slump » du matériau 16 est déterminé par la hauteur 17 correspondant à la différence entre la hauteur 12 du matériau avant la levée verticale du cône d'Abrams 11 et la hauteur du matériau après la levée verticale du cône d'Abrams 11. L'étalement ou « slump flow » du matériau 16 est déterminé par le diamètre 18 correspondant à la moyenne du diamètre le plus grand et du diamètre le plus petit de la surface occupée par le matériau sur la surface 15.

La figure 4 illustre une photographie d'un résultat du test du cône d'Abrams ou test de « slump » de boues calcaire comprenant 30 % d'eau en masse. L'affaissement ou le « slump » du matériau 16 selon la figure 3 est de 23 cm. Un tel affaissement indique que les boues calcaire comprenant 30 % d'eau sont très fluide, très humide et à maniabilité élevée.

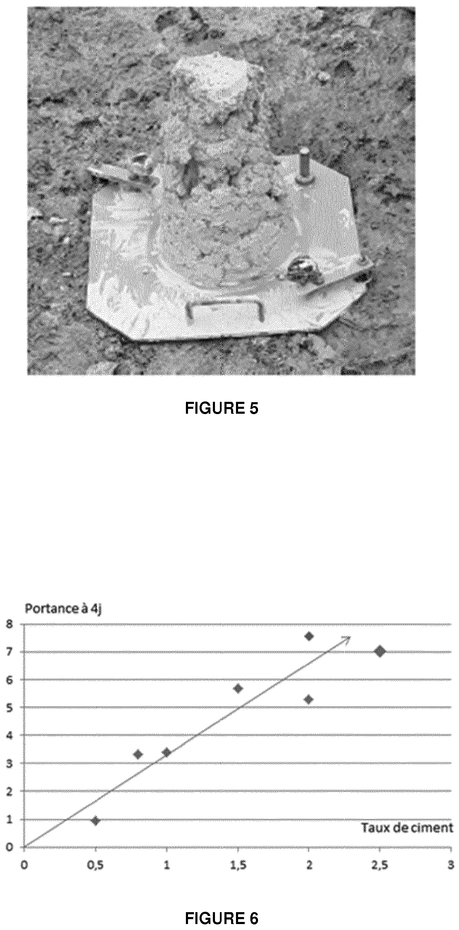

La figure 5 illustre une photographie d'un résultat du test du cône d'Abrams ou test de « slump » de boues calcaire avec 30 % d'eau en masse, après un traitement au ciment. L'affaissement ou le « slump » du matériau 16 selon la figure 4 est de 2 cm. Un tel affaissement indique que les boues calcaire comprenant 30 % d'eau après traitement au ciment sont fermes, très sèches et peu maniable.

La figure 6 illustre un graphique indiquant l'évolution de l'Indice de Portance Immédiate (IPI) à 4 jours en fonction du taux de ciment ajouté dans des boues issues de matériaux excavés. Ce graphique démontre une augmentation de la portance à 4 jours des matériaux excavés lorsqu'ils sont traités par ajout de ciment. Le graphique démontre une corrélation entre la portance obtenue pour le matériau excavé et le taux de ciment ajouté. Plus le taux de ciment ajouté est important plus la portance est importante.

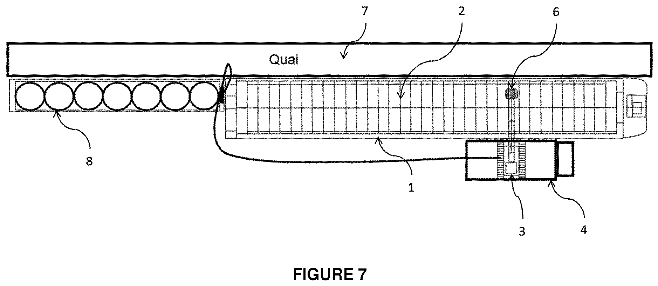

La figure 7 illustre une vue de dessus d'une installation de traitement de matériaux comprenant une barge 1 qui comprend les matériaux issus d'excavation 2. Un engin de chantier 3 est disposé sur une plateforme mobile 4 et est équipé d'un bras comprenant à son extrémité un rotomixeur 6. L'installation est située près d'un quai 7 et comprend des cuves 8 de stockage de matériaux issus d'excavation et qui ont été traités ou non selon une étape c) de l'invention.

### EXEMPLES

La suite de la description comprend la description d'essais et des résultats obtenus lors de la mise en œuvre de la méthode de l'invention. Les exemples ci-après sont donnés à titre purement illustratifs et ne doivent pas être considérés comme limitant la portée de l'invention.

Des matériaux semblables à des boues crayeuses, c'est-à-dire comprenant de la craie, issues d'excavation par tunnelier sont reproduites. Une granulométrie initiale de craie pour l'essai est déterminée comme étant comprise entre 0 et 150 mm, comprenant également des blocs de craie dont la granulométrie est supérieure à 200 mm, avec taux d'humidité de 22% (équivalent à une siccité de 78%). Pour les essais est utilisée une solution d'agent moussant (notamment à base de tensioactifs) diluée entre 1 et 5% pour générer 10 litres de mousse par litre de solution. L'agent moussant est utilisé pour améliorer la rhéologie du matériau excavé lors du creusement. Pour les essais, on utilise par exemple l'agent CLB F5 commercialisé par Condat.

Pour les essais est utilisé un agent liant, étant du ciment pur, CEM I 52.5 préféré à d'autres liants, tel que la chaux ou le mélange ciment-chaux. Tous les essais sont effectués dans une benne.

### Essai 1

La solution n°1 comprend : 27 tonnes de craie, 1,5 à 1,7 m³ d'eau, 500 L de mousse. L'affaissement ou « slump » de la solution n°1 est de 23 cm (voir figure 4). Il est plus fluide que la matière en sortie de tunnelier (10-15cm).

Un agent liant, ciment CEM I 52.5, est ajouté au taux de 1.2% (330 kg) en deux fois avec un malaxage total d'environ 20 min à l'aide d'un malaxeur ouvert (rotomixeur à bras fixé sur un engin). Environ 1h après l'ajout de l'agent liant ciment l'affaissement mesuré ou « slump » est de 2 cm (voir figure 5).

La solution résultante, malaxée et comprenant l'agent liant, est homogène. La solution traitée, remis en tas, est pelletable.

### Essai 2

La solution n°2 comprend : 37,5 t de craie en 4 couches successives avec 700 L de mousse ajoutée au fur et à mesure (4 x 50 secondes par couches), 2 m³ d'eau (2 x 1 m³, mélange 8 minutes après chaque ajout). L'affaissement ou « slump » n'est pas mesurable car le matériau est inhomogène.

L'agent liant (280 kg), ciment CEM I 52.5, est ajouté au taux de 0,75 % en une fois avec un malaxage total de 8 minutes.

La solution résultante du malaxage à l'aide d'un rotomixeur à bras est visuellement ferme et l'affaissement ou « slump » est estimé à moins de 5 cm. La solution traitée, remis en tas, est susceptible de terrassement.

### Essai 3

La solution n°2 est réutilisée pour l'essai 3.

L'agent liant (630 kg), ciment CEM I 52.5, est ajouté au taux de 1,7% en une fois avec un malaxage total de 8 minutes.

La solution résultante du malaxage à l'aide d'un rotomixeur à bras est moins ferme que les solutions résultantes des essais n°1 et n°2 après ajout du liant. L'affaissement ou « slump » est estimé à 5-10 cm.

**[Table 2]**

| | % Liant | %H₂O | IPI |
|---|---|---|---|
| Essai 1 | 1,2 | 28,5 | 2,6 |
| Essai 2 | 0,75 | 23 | 3,4 |
| Essai 3 | 1,7 | 28,8 | 9 |

Les valeurs d'Indice sur la Portance Immédiate sont suffisantes à Jour +2 après traitement même à faible dosage en agent déshydratant pour que les matériaux après traitement soient pelletables ou compactables.

## Revendications

1. Méthode de traitement de matériaux liquides ou pâteux (2), lesdits matériaux liquides comprenant de 6 à 40% de matières sèches et lesdits matériaux pâteux comprenant de 40 à 60% de matières sèches, lesdits matériaux liquides ou pâteux (2) comprenant des grains ou blocs ayant une granulométrie maximale comprise entre 5 et 25 cm, et lesdits matériaux liquides ou pâteux (2) étant directement issus d'excavations sans étape intermédiaire de broyage comprenant :
a) une étape de stockage desdits matériaux directement issus d'excavations sans étape intermédiaire de broyage dans un contenant ouvert (1) ;
b) une étape d'ajout auxdits matériaux stockés (2) d'un agent déshydratant dans ledit contenant ; et
c) une étape de malaxage desdits matériaux stockés (2) et dudit agent déshydratant réalisée dans le contenant,
le malaxage étant effectué avec un malaxeur ouvert (3) dépourvu de contenant, notamment de type rotomixeur à bras.

2. Méthode selon la revendication 1, où les matériaux liquides ou pâteux (2) sont des boues d'excavation, et où la méthode a une durée inférieure à 24 heures et trait un volume de boues d'excavations allant jusqu'à 2000 m³.

3. Méthode selon la revendication 1 ou la revendication 2, la méthode formant des matériaux stabilisés et homogènes ayant un indice de portance immédiate (IPI) supérieur ou égal à 3, mesuré selon la norme NF P 94-078 de mai 1997.

4. Méthode selon l'une des revendications 1 à 3, **caractérisé en ce que** le contenant ouvert (1) est transportable.

5. Méthode selon l'une des revendications 1 à 4, l'étape d'ajout comprenant au moins une étape d'injection de l'agent déshydratant dans ledit contenant (1).

6. Méthode selon l'une des revendications 1 à 5, le rapport massique entre la quantité d'agent déshydratant ajoutée et le matériau stocké dans le contenant (1) étant compris entre 0,1 à 10%, de préférence de 0,1 à 5 %, par exemple de 0,5 à 2,5, % notamment de 0,7 à 2%, en particulier 1,8%.

7. Méthode selon l'une des revendications 1 à 6, l'agent déshydratant comprenant un agent liant, par exemple du ciment et/ou de la chaux.

8. Méthode selon l'une des revendications 1 à 6, l'agent déshydratant comprenant ou étant constitué de ciment, notamment de ciment Portland, de préférence un ciment d'aluminates, un ciment sulfo-alumineux, ou leur mélange.

9. Méthode selon l'une des revendications précédentes, **caractérisée en ce que** l'étape de malaxage est réalisée simultanément à l'au moins une étape d'ajout dudit agent déshydratant dans le contenant.

10. Méthode selon l'une quelconque des revendications précédentes, **caractérisée en ce que** :
- le malaxeur ouvert (3) est mobile, et se déplace lors de la mise en œuvre de l'étape de malaxage, ou
- le contenant ouvert (1) est mobile, et se déplace lors de la mise en œuvre de l'étape de malaxage.

11. Méthode selon l'une des revendications précédentes, les matériaux liquides ou pâteux (2) présentant une siccité comprise entre 25% et 60%, notamment entre 30% et 40% ou entre 40% et 50%

12. Méthode selon l'une quelconque des revendications précédentes, **caractérisée en ce que** les matériaux liquides ou pâteux issus d'excavations possèdent un indice de Portance Immédiate inférieur à 3, mesuré selon la norme NF P 94-078 de Mai 1997.

13. Méthode selon l'une quelconque des revendications précédentes, **caractérisée en ce que** les matériaux liquides ou pâteux (2) issus d'excavations présentent un indice d'affaissement supérieur ou égal à 5 cm selon le test du cône d'Abrams, mesuré notamment selon la norme NF EN 12350-2 d'avril 2012.

14. Méthode selon l'une quelconque des revendications précédentes, **caractérisée en ce que** les matériaux liquides ou pâteux (2) issus d'excavations sont des boues de tunnelier.

## Patentansprüche

1. Verfahren zur Aufbereitung von flüssigen oder pastösen Materialien (2), wobei die flüssigen Materialien 6 bis 40 % Trockensubstanz und die pastösen Materialien 40 bis 60 % Trockensubstanz enthalten, wobei die flüssigen oder pastösen Materialien (2) Körner oder Blöcke mit einer maximalen Korngröße zwischen 5 und 25 cm umfassen, und wobei die flüssigen oder pastösen Materialien (2) direkt aus Aushubarbeiten stammen, ohne dass ein Zwischenschritt des Zerkleinerns erfolgt, umfassend:
a) einen Schritt des Lagern der ohne einen Zwischenschritt des Zerkleinerns direkt aus Aushubarbeiten stammenden Materialien in einem offenen Behälter (1);
b) einen Schritt des Zugebens eines Trocknungsmittels zu den gelagerten Materialien (2) in dem Behälter; und
c) einen Schritt des Vermischens der gelagerten Materialien (2) und des Trocknungsmittels, der in dem Behälter durchgeführt wird,
wobei das Vermischen mit einem offenen Mischer (3) ohne Behälter erfolgt, insbesondere mit einem Rotationsmischer mit Rührarmen.

2. Verfahren nach Anspruch 1, wobei es sich bei den flüssigen oder pastösen Materialien (2) um Aushubschlämme handelt, und wobei das Verfahren weniger als 24 Stunden dauert und ein Volumen an Aushubschlämmen von bis zu 2000 m³ aufbereitet wird.

3. Verfahren nach Anspruch 1 oder Anspruch 2, wobei das Verfahren stabilisierte und homogene Materialien ergibt, deren direkter Tragindex (indice de portance immédiate, IPI) größer oder gleich 3 ist, gemessen gemäß der Norm NF P 94-078 vom Mai 1997.

4. Verfahren nach einem der Ansprüche 1 bis 3, **dadurch gekennzeichnet, dass** der offene Behälter (1) transportierbar ist.

5. Verfahren nach einem der Ansprüche 1 bis 4, wobei der Schritt des Zugebens mindestens einen Schritt des Injizierens des Trocknungsmittels in den Behälter (1) umfasst.

6. Verfahren nach einem der Ansprüche 1 bis 5, wobei das Massenverhältnis zwischen der Menge des zugegebenen Trocknungsmittels und dem in dem Behälter (1) gelagerten Material zwischen 0,1 und 10 %, vorzugsweise zwischen 0,1 und 5 %, beispielsweise zwischen 0,5 und 2,5 %, insbesondere zwischen 0,7 und 2 % und insbesondere 1,8 % liegt.

7. Verfahren nach einem der Ansprüche 1 bis 6, wobei das Trocknungsmittel ein Bindemittel, beispielsweise Zement und/oder Kalk, umfasst.

8. Verfahren nach einem der Ansprüche 1 bis 6, wobei das Trocknungsmittel Zement, insbesondere Portland-Zement, vorzugsweise einen Aluminat-Zement, einen Sulfo-Aluminat-Zement oder eine Mischung daraus umfasst oder daraus besteht.

9. Verfahren nach einem der vorstehenden Ansprüche, **dadurch gekennzeichnet, dass** der Schritt des Vermischens gleichzeitig mit dem mindestens einen Schritt des Zugebens des Trocknungsmittels in dem Behälter durchgeführt wird.

10. Verfahren nach einem der vorstehenden Ansprüche, **dadurch gekennzeichnet, dass**:
- der offene Mischer (3) beweglich ist und sich während des Schritts des Vermischens bewegt, oder
- der Behälter (1) beweglich ist und sich während des Schritts des Vermischens bewegt.

11. Verfahren nach einem der vorstehenden Ansprüche, wobei die flüssigen oder pastösen Materialien (2) einen Trockengehalt zwischen 25 % und 60 %, insbesondere zwischen 30 % und 40 % oder zwischen 40 % und 50 %, aufweisen.

12. Verfahren nach einem der vorstehenden Ansprüche, **dadurch gekennzeichnet, dass** die aus Aushubarbeiten stammenden flüssigen oder pastösen Materialien einen direkten Tragindex von weniger als 3 aufweisen, gemessen gemäß der Norm NF P 94-078 vom Mai 1997.

13. Verfahren nach einem der vorstehenden Ansprüche, **dadurch gekennzeichnet, dass** die aus Aushubarbeiten stammenden flüssigen oder pastösen Materialien (2) einen Setzwert von mindestens 5 cm gemäß dem Abrams-Kegelversuch aufweisen, gemessen insbesondere gemäß der Norm NF EN 12350-2 vom April 2012.

14. Verfahren nach einem der vorstehenden Ansprüche, **dadurch gekennzeichnet, dass** es sich bei den aus Aushubarbeiten stammenden flüssigen oder pastösen Materialien (2) um Tunnelbohrschlamm handelt.

## Claims

1. Method for the treatment of liquid or paste materials (2), said liquid materials comprising 6 to 40% of dry materials and said paste materials comprising 40 to 60% of dry materials, said liquid or paste materials (2) comprising grains or blocks having maximum grain size of between 5 and 25cm, and said liquid or paste materials (2) coming directly from excavations without an intermediate grinding step, comprising:
a) a step of storing said materials coming directly from excavations without an intermediate grinding step in an open container (1);
b) a step of adding a dehydrating agent to said stored materials (2) in said container; and
c) a step of mixing said stored materials (2) and said dehydrating agent done in the container,
the mixing being done with an open mixer (3) with no container, in particular, of the rotary mixer with arms type.

2. Method according to claim 1, wherein the liquid or paste materials (2) are excavated sludge, and wherein the method has a duration less than 24 hours and treats a volume of excavated sludge going up to 2000m³.

3. Method according to claim 1 or claim 2, the method forming stabilized and homogeneous materials having a direct carrying capacity (DCC) greater than or equal to 3, measured according to the standard NF P 94-078 of May 1997.

4. Method according to any one of claims 1 to 3, **characterised in that** the open container (1) is transportable.

5. Method according to any one of claims 1 to 4, the adding step comprising at least one step of injecting the dehydrating agent into said container (1).

6. Method according to any one of claims 1 to 5, the mass ratio between the quantity of added dehydrating agent and the material stored in the container (1) being between 0.1 and 10%, preferably 0.1 and 5%, for example, 0.5 to 2.5%, in particular 0.7 to 2%, in particular, 1.8%.

7. Method according to any one of claims 1 to 6, the dehydrating agent comprising a binding agent, for example, cement and/or lime.

8. Method according to any one of claims 1 to 6, the dehydrating agent comprising or being constituted of cement, in particular, Portland cement, preferably an aluminate cement, a sulpho-aluminous cement, or their mixture.

9. Method according to any one of the preceding claims, **characterised in that** the mixing step is carried out simultaneously to the at least one step of adding said dehydrating agent into the container.

10. Method according to any one of the preceding claims, **characterised in that**:
- the open mixer (3) is moveable, and moves during the implementation of the mixing step, or
- the open container (1) is moveable, and moves during the implementation of the mixing step.

11. Method according to any one of the preceding claims, the liquid or paste materials (2) having a dryness of between 25% and 60%, in particular, between 30% and 40%, or between 40% and 50%.

12. Method according to any one of the preceding claims, **characterised in that** the liquid or paste materials coming from excavations have a direct carrying capacity less than 3, measured according to the standard NF P 94-078 of May 1997.

13. Method according to any one of the preceding claims, **characterised in that** the liquid or paste materials (2) coming from excavations have a subsidence index greater than or equal to 5cm according to the Abrams Cone Test, measured, in particular, according to the standard NF EN 12350-2 of April 2012.

14. Method according to any one of the preceding claims, **characterised in that** the liquid or paste materials (2) coming from excavations are tunneling sludge.
